# EUROPÄISCHE PATENTSCHRIFT

(11) **EP 0 598 283 B1**
(45) Veröffentlichungstag und Bekanntmachung des Hinweises auf die Patenterteilung: **29.10.1997**
(21) Anmeldenummer: 93117819.8
(22) Anmeldetag: 03.11.1993
(51) Int. Cl.: C08G 18/08, C08G 18/10, B01J 19/24, B01J 19/18

(54) **Kontinuierliches Verfahren zur Umsatzsteuerung von Polyurethan-Prepolymeren durch teilweise Vermischung des Prepolymeren mit den Monomeren**
Continuous process for the conversion control of polyurethane prepolymers by partially mixing the prepolymers with monomers
Procédé en continu pour le contrôle de la conversion de prépolymères de polyuréthane par mélange partiel des prépolymères avec des monomères

(30) Priorität: 16.11.1992 DE 4238629
(43) Veröffentlichungstag der Anmeldung: 25.05.1994
(73) Patentinhaber: BAYER AG, 51368 Leverkusen (DE)
(72) Erfinder: Bräuer, Wolfgang, Dr., D-51375 Leverkusen (DE); Müller, Friedemann Dr., D-41470 Neuss (DE); Ott, Karl-Heinz, Dr., D-51375 Leverkusen (DE); Hoppe, Hans-Georg, Dipl.-Ing., D-42799 Leichlingen (DE)

(56) Entgegenhaltungen:
- EP-A- 0 480 588
- DE-A- 1 964 834
- GB-A- 2 055 050
- US-A- 3 066 015

## Beschreibung

Die Erfindung betrifft ein kontinuierliches Verfahren zur Umsatzsteuerung von im wesentlichen linearen Polyurethan-Prepolymeren durch teilweise Rückvermischung von schon gebildeten Prepolymeren mit den Monomeren und die anschließende Kettenverlängerung zum thermoplastisch verarbeitbaren Polyurethanelastomeren.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester oder Polyether, organischen Diisocyanaten und kurzkettigen Diolen (Kettenverlängerer) aufgebaut. Dabei kann wie bei allen Polyurethanelastomeren der Aufbau entweder schrittweise (Prepolymerverfahren) oder durch die gleichzeitige Reaktion aller Komponenten in einer Stufe erfolgen (one shot). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Dieses Verfahren erlaubt eine bessere Reaktionskontrolle und Phasenseparierung als das one shot-Verfahren.

Die TPU's können kontinuierlich oder diskontinuierlich hergestellt werden. Verfahren, die in Lösung durchgeführt werden (GB-PS 11 65 654), sind allein wegen der dann notwendigen Lösungsmittelabtrennung nicht wirtschaftlich. Deshalb sind zur Herstellung der TPU's die Masseverfahren vorherrschend. Als die bekanntesten technischen Herstellverfahren werden das sogenannte Bandverfahren und das Extruderverfahren genutzt.

Nach der GB 1 057 018 wird aus einer im wesentlichen linearen Polyhydroxylverbindung und überschüssigen organischen Diisocyanaten ein Prepolymer batchweise bei Temperaturen <100°C hergestellt, abgekühlt und über eine Dosierpumpe einem Mischkopf zugeführt. Dort mischt man es mit einer bestimmten Menge eines niedermolekularen Diols. Das erhaltene Reaktionsgemisch wird unter Erhitzung auf bis zu 130°C auf ein Förderband gebracht. Es folgt ein Zerkleinern und Tempern des Reaktionsproduktes. Die benötigte lange Reaktionszeit der Batch-Prepolymerbildung von 1 bis 2 Stunden ist wirtschaftlich nachteilig bei diesem Verfahren. Zusätzlich können bei dieser Prepolymerbildung für die thermoplastische Verarbeitbarkeit schädliche Vernetzungen auftreten.

Beim Extruderverfahren, das z.B. in der DE 19 64 834 oder DE-OS 20 59 570 beschrieben wird, werden die Aufbaukomponenten Polyhydroxylverbindung, Diisocyanat und niedermolekulare Glykole in den Extruder eingebracht. Diese werden einzeln, vorgemischt bzw. als Voraddukt von Polyhydroxylverbindung und Diisocyanat direkt in den Extruder dosiert und die Reaktion im Extruder unter bestimmten Verfahrensbedingungen durchgeführt. Dabei kann sowohl die Prepolymerfahrweise (Batch im Kessel oder kontinuierlich im Extruder) als auch die one shot-Methode im Extruder angewendet werden. Das so hergestellte thermoplastische Polyurethan wird als Strang extrudiert, abgekühlt und zerkleinert. Nachteilig ist, daß die nach diesem Verfahren hergestellten TPU's nicht für alle Anwendungsgebiete gleichbleibend gute Eigenschaften aufweisen. TPU's gleicher Zusammensetzung sind nach dem Extruderverfahren transparent, während sie nach dem Bandverfahren ein opakes Aussehen zeigen. Opake TPU's können gut zu Folien verarbeitet werden, während transparente TPU's hierfür aufgrund ihrer Blockneigung weniger geeignet sind. Bei der Batch-Prepolymerfahrweise gelten wieder die oben erwähnten Nachteile. Bei der kontinuierlichen Prepolymerbildung im Extruder bzw. bei der one shot-Fahrweise können die Reaktivitätsunterschiede der Rohstoffe schlecht oder gar nicht über die Verfahrensbedingungen ausgeglichen werden; d.h. die Prepolymerreaktion ist auf diese Weise schlecht oder gar nicht steuerbar. Rohstoffschwankungen wirken sich so auf die TPU-Qualität negativ aus.

Eine Verbesserung brachte der früher beschriebene Mehrstufenprozeß (DE 42 17 364) bei dem in der ersten Stufe gezielt ein Prepolymer erzeugt wird.

Der Nachteil dieses Verfahrens ist in der betrieblichen Praxis die eingeschränkte Steuerbarkeit dieser Methode. Das Reaktorvolumen ist dabei gar nicht, die Verweilzeit aufgrund der Durchsatzvorgabe und die Reaktortemperatur aufgrund der Nebenreaktionen nur in engen Grenzen variierbar. Dadurch können Reaktivitätsunterschiede der eingesetzten Rohstoffe nur bedingt durch Veränderungen der Reaktionsbedingungen ausgeglichen werden.

Es bestand also weiterhin die Aufgabe, nach einem wirtschaftlichen und betriebsgerechten Verfahren zu suchen, mit dem ein Polyurethan-Prepolymer gezielt und kontrolliert für die TPU-Herstellung von sowohl harten Spritzguß- als auch weichen Folientypen erzeugt wird.

Überraschenderweise wurde ein kontinuierliches Verfahren zur Umsatzsteuerung von Polyurethan-Prepolymeren durch Reaktion von einem oder mehreren Diisocyanaten mit einem oder mehreren im wesentlichen linearen hydroxylterminierten Polyolen in einem Reaktor in einem molaren Verhältnis von 1,3:1,0 bis 15,0:1,0 gefunden, dadurch gekennnzeichnet, daß man die im rohrförmigen Reaktor, dessen Lange/Durchmesser-Verhältnis mindestens 2:1 beträgt, gebildete Reaktionsmischung aus den Monomeren und dem Prepolymer teilweise im Kreis zum Reaktoranfang zurückführt und dort mit den frisch dosierten Monomeren intensiv vermischt, das Prepolymer zu mehr als 80 % umsetzt und am Reaktorende austrägt.

Bevorzugte Polyole sind Polyester, Polyether, Polycarbonate oder ein Gemisch aus diesen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamin, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Es können auch trifunktionelle Polyetherole in Anteilen von 0 bis 30 Gew.-% bezogen auf die bifunktionellen Polyetherole eingesetzt werden.

Die im wesentlichen linearen Polyetherole besitzen vorzugsweise Molekulargewichte von 500 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropan-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiolbutandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 5000.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclo-hexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat, Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein unvernetztes Produkt entsteht, verwendet werden. Beispiele sind Triphenylmethan-4,4',4"-triisocyanat und Polyphenyl-polymethylenpolyisocyanate.

Als Kettenverlängerungsmittel mit den Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und/oder -2,6-toluylen-diamin und primäre ortho-, di-, tri- und/oder tetraalkylsubstituierte 4,4'-Diaminodiphenylmethane. Es können auch Gemische der obengenannten Kettenverlängerer eingesetzt werden.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1 bis 1,20:1, vorzugsweise 0,95:1 bis 1,10:1 beträgt.

Geeignete Katalysatoren, welche insbesondere die Reaktion zwischen den NCO-Gruppen der Diisocyanate und den Hydroxylgruppen der Diol-Komponenten beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Weitere Zusatzkomponenten, die in das TPU eingearbeitet werden können, sind Thermoplaste beispielsweise Polycarbonate und Acrylnitrilbutadienstyrolterpolymere, insbesondere ABS. Ebenfalls können andere Elastomere wie z.B. Kautschuk, Ethylenvinylacetatpolymere, Styrolbutadiencopolymere sowie andere TPU's verwendet werden. Weiterhin zur Einarbeitung geeignet sind handelsübliche Weichmacher wie z.B. Phosphate, Phthalate, Adipate, Sebacate.

Die Prepolymerrohstoffe werden bei Temperaturen oberhalb ihres Schmelzpunktes innig vermischt. Dieses wird vorzugsweise in einem Mischaggregat mit hoher Scherenergie durchgeführt. Beispielsweise können ein Mischkopf, vorzugsweise ein hochtouriger Stachelmischer, oder eine Düse verwendet werden.

Die Reaktionstemperaturen liegen oberhalb von 100°C, vorzugsweise zwischen 100°C und 250°C. Für den bevorzugten kontinuierlich ablaufenden Prozeß wird ein rohrförmiger Reaktor benutzt.

Das Länge/Durchmesser-Verhältnis dieses Rohres beträgt mindestens 2:1 , bevorzugt zwischen 2:1 und 20:1. Ein kleiner Teil der erzeugten Prepolymerreaktionsmischung vom Ende des Reaktors wird im Kreis zum Reaktoranfang zurückgeführt. Sie wird mit den frisch dosierten Monomeren intensiv durchmischt und erhöht so den Prepolymerumsatz.

Insgesamt benötigt man so eine kürzere Verweilzeit oder eine niedrigere Reaktionstemperatur zum Erreichen eines im wesentlichen vollständigen Prepolymerumsatzes als ohne diese Rückführung. Gleichzeitig erhält man die Möglichkeit, über die Steuerung der Rückführungsmenge und/oder der Rückführungstemperatur den Umsatz der Prepolymerbildung einzustellen.

In dieser werden Stufe mehr als 80 Mol-% Makrodiol umgesetzt werden. Bevorzugt erhält man einen Umsatz von 95 ± 5 %. Die Verweilzeit beträgt zwischen 10 und 300 Sekunden.

In einer bevorzugten Variante wird das Rohr so gerührt, daß im Rohr durch eine geeignete Rührergeometrie eine Rückwärtsströmung bis zum Reaktoranfang erzeugt wird, deren Ausmaß von der Drehzahl des Rührers abhängig ist. Als Beispiel soll ein Rührer aus horizontal angebrachten Metallstiften genannt werden (Stachelrührer).

In einer zweiten bevorzugten Form wird die Rückwärtsströmung durch ein zusätzliches das Reaktorende mit dem Reaktoranfang verbindendes Rohr gewährleistet (Loop). Das Ausmaß der Rückströmung kann hier durch ein Ventil oder durch eine Pumpe gesteuert werden. Das Verbindungsrohr ist vorzugsweise beheizt, womit Prepolymer-Temperaturen zwischen 100° und 250°C eingestellt werden können. Es kann aber auch die Kombination Düse/Rohrreaktor mit Rührer oder Statikmischer und Loop verwendet werden.

Ebenfalls kann die teilweise Rückströmung durch eine Kombination der beiden erwähnten bevorzugten Formen (Rührer und Loop) erzeugt werden.

Zur Herstellung eines thermoplastisch verarbeitbaren Polyurethans wird das erfindungsgemäß erzeugte Prepolymer wie früher beschrieben mit den niedermolekularen Diol- und gegebenenfalls Triol-Kettenverlängerern vermischt und zur Reaktion gebracht.

Auch für diese Stufe ist ein mit hoher Scherenergie arbeitendes Mischaggregat von Vorteil. Beispielhaft seien ein Mischkopf oder ein Schneckenextruder genannt. Die Reaktion kann dann in einem Extruder oder auf einem Band erfolgen. Beispielhaft seien die bekannten Cokneter insbesondere Extruder, wie z.B. Einwellen-, Zweiwellenextruder und Busskneter sowie die bekannten beheizten Förderbänder genannt. Die Reaktionstemperaturen werden so gewählt, daß die Kettenverlängerungsreaktion zum vollständigen Umsatz gebracht wird und die mögliche Einarbeitung der oben erwähnten Hilfsstoffe bzw. der weiteren Komponenten bei größtmöglichster Produktschonung durchgeführt werden kann.

Entscheidend am erfindungsgemäßen Verfahren ist die Einstellung des gewünschten Prepolymerumsatzes von >80 % durch das Ausmaß an Rückströmung zum Reaktoranfang.

Die bisher bekannten Einstellgrößen Temperatur und Verweilzeit können bei einem wirtschaftlichen Herstellverfahren nur in engen Grenzen variiert werden. Bei Erhöhung der Reaktionstemperaturen nehmen die Nebenreaktionen schnell zu. Eine Verlängerung der Verweilzeit führt rasch zu einer wirtschaftlich untragbaren Ausstoßverringerung.

Durch das neue Verfahren wird zum einen der Umsatz bei gleicher Verweilzeit und Temperatur erhöht. Dadurch kann entweder die Reaktortemperatur abgesenkt (weniger Nebenreaktionen) oder der Durchsatz vergrößert werden. Zum anderen erhält man eine neue Steuerungsmöglichkeit, um über die Dosierung der Rückströmung und/oder der Rücklauftemperatur Unterschiede in der Rohstoffreaktivität auszugleichen.

Nach dem erfindungsgemäßen Prepolymer-Prozeß können also TPU's mit nur sehr geringen Eigenschaftsschwankungen hergestellt werden.

Die so erhaltenen Produkte besitzen sehr gute mechanische Eigenschaften und eignen sich zur Herstellung von Spritzgußartikeln und Extrusionsartikeln.

In den folgenden Beispielen wird das erfindungsgemäße Verfahren der Prepolymerbildung in zwei Varianten verdeutlicht.

### Beispiele

### Beispiel 1 (nicht erfindungsgemäßes Vergleichsbeispiel)

100 Gew.-Teile eines Poly-butandiol-1,4-adipates mit einem Molgewicht von ca. 2250 wurden auf 120°C erhitzt und mittels einer Zahnradpumpe in ein mit einem Stachelmischer ausgerüstetes Rohr dosiert.

Der Stachelmischer ist durchgehend mit vertikal angebrachten Metallstiften besetzt.

Mittels einer zweiten Zahnradpumpe wurden in das gleiche Rohr 40 Gew.-Teile geschmolzenes (50°C) 4,4-Diphenylmethandiisocyanat (MDI) gepumpt. Das Rohr hat ein Länge/Durchmesser-Verhältnis von 5,4 und ein Volumen von 250 ml. Die Drehzahl des Mischers betrug ca. 1000 U/min. Die Dosiergeschwindigkeit stellte man auf eine Verweilzeit von 46 Sekunden ein.

Am Reaktoraustritt wurde ein Prepolymerumsatz¹⁾ von 72 Gew.-% bezogen auf den Polyester gemessen. Die Massetemperatur im Reaktoranfang betrug 107°C.
1) Umsatzbestimmung: Produktproben wurden in Dibutylaminlösung abgestoppt. Rücktitration mit HCl ergab den nicht umgesetzten Rest-NCO-Gehalt, aus dem der Umsatz berechnet werden kann.

Eine Überprüfung der Rückvermischung durch eine Prepolymerprobennahme nach einem Drittel des Reaktors (Farbstoffaufgabe am Reaktorende) ergab keinerlei Färbung, d.h. keine Rückvermischung.

### Beispiel 2

Analog Beispiel 1 wurde der Versuch mit identischen Ausgangsstoffen und Dosierungen bei 3500 U/min durchgeführt.

Am Reaktoraustritt wurde jetzt ein Prepolymerumsatz von 92 Gew.-% gemessen. Die Massetemperatur am Reaktoranfang betrug 137°C.

Eine Überprüfung durch eine Prepolymerprobenahme nach einem Drittel des Reaktors (Farbstoffaufgabe am Reaktorende) ergab eine deutliche Verfärbung. Die Rückwärtsströmung im Reaktor hat also zu einem deutlichen Umsatzanstieg geführt.

Der Prepolymerumsatz kann also in einem gerührten Rohrreaktor durch eine von der Drehzahl gesteuerten Rückwärtsströmung im Reaktor gezielt eingestellt werden.

### Beispiele 3 bis 11

100 Gew.-Teile eines Poly-butylenoxides mit einem Molgewicht von ca. 2000 wurden auf Starttemperatur erhitzt und mittels einer Zahnradpumpe in ein mit einem Stachelmischer ausgerüstetes Rohr (Beispiel 2) dosiert. Die Drehzahl des Mischers betrug ca. 3500 U/min.

Mittels einer zweiten Zahnradpumpe wurden in das gleiche Rohr 44 Gew.-Teile geschmolzenes (50°C) 4,4-Diphenylmethandiisocyanat (MDI) gepumpt. Das Reaktorrohr hat ein Länge/Durchmesser-Verhältnis von 8 und ein Volumen von 390 ml. Am Reaktoraustritt zweigt ein beheiztes Rohr vom Hauptstrom ab und führt über eine Zahnradpumpe auf kurzem Weg zurück zum Reaktoranfang (Loop, Gesamtvolumen Reaktor + Loop = 427 ml).

Über die Pumpe wird das Rücklaufverhältnis und über die Rohrheizung die Rücklauftemperatur eingestellt.

Die Dosiergeschwindigkeit stellte man auf die jeweilige Gesamt-Verweilzeit (Gesamtvolumen: Reaktor + Loop) ein.

In Tabelle 1 sind die kennzeichnenden Daten von verschiedenen Versuchen (erfindungsgemäße und Vergleichsbeispiele) angegeben. Beispiele 3 und 4, 5 bis 9 und 10 bis 11 wurden mit den jeweiligen identischen Rohstoffen durchgeführt.

Man erkennt die Umsatzerhöhung durch den teilweisen Rücklauf (Bsp. 3-7) bzw. durch die Rücklauftemperatur (Bsp. 10/11).

In den Vergleichsbeispielen 8 und 9 sind die bisher bekannten Möglichkeiten der Umsatzbeeinflussung dargestellt. Die Erhöhung der Starttemperatur führt zu einem erhöhten Gehalt an Allophanat/Biuret-Vernetzungen²⁾, die Verlängerung der Verweilzeit zu einem deutlich geringeren Durchsatz.
2) Allophanat/Biuret-Gehalt: Produktproben wurden mit Methanol/Dimethylsulfoxid-Lösung bei 50°C behandelt. Anschließend erfolgt Aminolyse mit Dibutylaminlösung bei 80°C. Rücktitration mit HCl ergibt die Summe von Allophanat und Biuret-Gehalt.

Der Prepolymerumsatz kann also in einem Rohrreaktor durch eine gesteuerte Prepolymerrückführung in einem beheizten Loop gezielt eingestellt werden. Im Vergleich zum alten Verfahren erhält man zudem einen deutlich erhöhten Umsatz.

### Beispiel 12

Das analog den Beispielen 3 bis 11 hergestellte Prepolymer wurde anschließend mit 11,5 Gew.-Teilen Butandiol intensiv vermischt und zum thermoplastisch verarbeitbaren Polyurethanelastomeren umgesetzt.

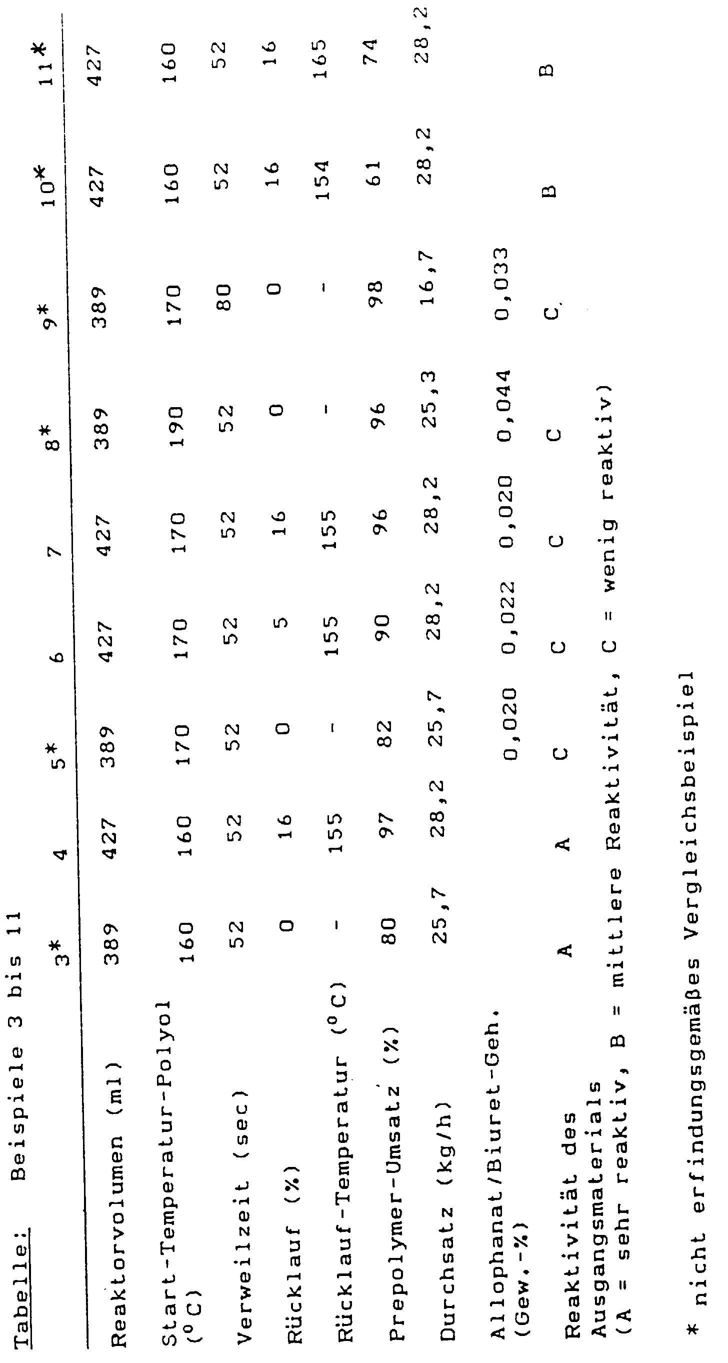

## Patentansprüche

1. Kontinuierliches Verfahren zur Umsatzsteuerung von Polyurethan-Prepolymeren durch Reaktion von einem oder mehreren Diisocyanaten mit einem oder mehreren im wesentlichen linearen hydroxylterminierten Polyolen in einem Reaktor in einem molaren Verhältnis von 1,3:1,0 bis 15,1:1,0, dadurch gekennzeichnt, daß man die im rohrförmigen Reaktor, dessen Länge/-Durchmesser-Verhältnis mindestens 2:1 beträgt, gebildete Reaktionsmischung aus den Monomeren und dem Prepolymer teilweise im Kreis zum Reaktoranfang zurückführt und dort mit den frisch dosierten Monomeren intensiv vermischt, das Prepolymer zu mehr als 80% umsetzt und am Reaktorende austrägt.

2. Kontinuierliches Verfahren zur Umsatzsteuerung von Polyurethan-Prepolymeren gemäß Anspruch 1, dadurch gekennzeichnet, daß die Rückführung von Teilen der Prepolymerreaktionsmischung mittels einer durch die Rührergeometrie im Reaktor erzeugten Rückwärtsströmung erfolgt.

3. Kontinuierliches Verfahren zur Umsatzsteuerung von Polyurethan-Prepolymeren gemäß Anspruch 1, dadurch gekennzeichnet, daß die durch ein Ventil oder eine Pumpe gesteuerte Rückführung von Teilen der Prepolymerreaktionsmischung mittels eines das Reaktorende mit dem Reaktoranfang verbindenden Rohrs erfolgt.

4. Kontinuierliches Verfahren zur Umsatzsteuerung von Polyurethan-Prepolymeren gemäß Anspruch 3, dadurch gekennzeichnet, daß das verbindende Rohr beheizt ist.

5. Kontinuierliches Verfahren zur Umsatzsteuerung von Polyurethan-Prepolymeren gemäß Anspruch 1, dadurch gekennzeichnet, daß die Rückführung von Teilen der Prepolymerreaktionsmischung nach Anspruch 2 und gleichzeitig nach Anspruch 3 oder 4 erfolgt.

6. Weitere Ausbildung des Verfahrens gemäß einem der Ansprüche 1 bis 5, dadurch gekennzeichnet, daß man das am Reaktorende ausgetragene Prepolymer mit einem oder mehreren der Kettenverlängerungsmittel Ethylenglykol, Butandiol, Hexandiol, 1,4-Di-(β-hydroxyethyl)-hydrochinon und gegebenenfalls Triol-Kettenverlängerern zum thermoplastisch verarbeitbaren Polyurethanelastomeren umsetzt, wobei insgesamt unter Hinzuziehung sämtlicher Reaktionskomponenten ein NCO/OH-Verhältnis von 0,95:1 bis 1,1:1 eingestellt wird.

## Claims

1. A continuous process for controlling the conversion of polyurethane prepolymers by reacting one or more diisocyanates with one or more substantially linear hydroxyl-terminated polyols in a reactor in a molar ratio of from 1.3:1.0 to 15.1:1.0, characterised in that the reaction mixture of the monomers and the prepolymer formed in the tubular reactor, whose length:diameter ratio amounts to at least 2:1, is partly recirculated to the beginning of the reactor and is there mixed intensively with the freshly added monomers, the prepolymer is converted at a rate of over 80% and is discharged at the end of the reactor.

2. A continuous process for controlling the conversion of polyurethane prepolymers according to claim 1, characterised in that the recirculation of parts of the prepolymer reaction mixture is effected by means of a reverse flow produced in the reactor by the stirrer geometry.

3. A continuous process for controlling the conversion of polyurethane prepolymers according to claim 1, characterised in that the recirculation, controlled by a valve or a pump, of parts of the prepolymer reaction mixture is effected by means of a tube connecting the end of the reactor with the beginning of the reactor.

4. A continuous process for controlling the conversion of polyurethane prepolymers according to claim 3, characterised in that the connecting tube is heated.

5. A continuous process for controlling the conversion of polyurethane prepolymers according to claim 1, characterised in that the recirculation of parts of the prepolymer reaction mixture is effected according to claim 2 and at the same time according to claim 3 or claim 4.

6. A further development of the process according to any one of claims 1 to 5, characterised in that the prepolymer discharged at the end of the reactor is reacted with one or more of the chain extenders ethylene glycol, butanediol, hexanediol, 1,4-di-(β-hydroxyethyl)-hydroquinone and optionally triol chain extenders to form the thermoplastically processable polyurethane elastomer, wherein an overall NCO:OH ratio, inclusive of all the reaction components, of from 0.95:1 to 1.1:1 is established.

## Revendications

1. Procédé en continu pour régler le degré de transformation de prépolymères de polyuréthanes par réaction d'un ou plusieurs diisocyanates avec un ou plusieurs polyols à terminaison hydroxyle essentiellement linéaires dans un réacteur, dans un rapport molaire de 1,3:1,0 à 15,1:1,0, caractérisé en ce que l'on renvoie partiellement dans le circuit, au début du réacteur, le mélange réactionnel des monomères et du prépolymère formé dans le réacteur tubulaire dont le rapport longueur/diamètre est d'au moins 2:1, et on l'y mélange énergiquement avec les monomères fraîchement ajoutés, on fait réagir le prépolymère à plus de 80 %, et on le fait sortir à l'extrémité du réacteur.

2. Procédé en continu pour régler le degré de transformation de prépolymères de polyuréthane selon la revendication 1, caractérisé en ce que le recyclage de parties du mélange réactionnel du prépolymère s'effectue à l'aide d'un courant en sens inverse obtenu grâce à la géométrie de l'agitateur dans la réacteur.

3. Procédé en continu pour régler le degré de transformation de prépolymères de polyuréthane selon la revendication 1, caractérisé en ce que le recyclage commandé par une vanne ou une pompe de parties du mélange réactionnel du prépolymère s'effectue à l'aide d'un tube reliant la fin du réacteur avec le début du réacteur.

4. Procédé en continu pour régler le degré de transformation de prépolymères de polyuréthane selon la revendication 3, composé accélérateur de réaction en ce que le tube de liaison est chauffé.

5. Procédé en continu pour régler le degré de transformation de prépolymères de polyuréthane selon la revendication 1, caractérisé en ce que le recyclage de parties du mélange réactionnel du prépolymère s'effectue selon la revendication 2 et en même temps selon la revendication 3 ou 4.

6. Autre perfectionnement du procédé selon l'une des revendications 1 à 5, caractérisé en ce que l'on fait réagir le prépolymère évacué à la sortie du réacteur avec un ou plusieurs des agents d'allongement de chaîne constitués par l'éthylèneglycol, le butanediol, l'hexanediol, la 1,4-di(β-hydroxyéthyl)hydroquinone et éventuellement des agents d'allongement de chaîne de type triol pour former des élastomères polyuréthane aptes à une mise en forme thermoplastique, en établissant dans l'ensemble un rapport NCO/OH de 0,95:1 à 1,1:1 si on se réfère à tous les constituants de la réaction.
